# FASCICULE DE BREVET EUROPEEN

(11) **EP 0 943 557 B1**
(45) Date de publication et mention de la délivrance du brevet: **05.02.2003**
(21) Numéro de dépôt: 99106732.3
(22) Date de dépôt: 06.05.1996
(51) Int. Cl.: B65D 77/20, D21H 27/10

(54) **Récipient pour denrées consommables constitué d'une feuille monocouche ou multicouche et procédé de réalisation**
Nahrungsmittelbehälter aus Einschicht- oder Mehrschichtmaterial und Herstellungsverfahren
Food container made from single or multi layer material and its method of manufacture

(30) Priorité: 15.05.1995 FR 9505707
(43) Date de publication de la demande: 22.09.1999
(62) Demande divisionnaire de: 96400961.7
(73) Titulaire: Ahlstrom Industries, 94400 Vitry sur Seine Cedex (FR)
(72) Inventeur: Cartier, Noel, 38200 Vienne (FR); Glachant, Dominique, 75018 Paris (FR); Girard, Pierre, 38330 Saint Ismier (FR)
(74) Mandataire: Vuillermoz, Bruno

(56) Documents cités:
- EP-A- 0 670 386
- WO-A-91/15410
- US-A- 3 756 495
- US-A- 3 792 809

## Description

La présente invention relève du domaine de l'industrie du papier et de la cartonnerie, et concerne plus spécialement un conteneur ou récipient destiné au conditionnement de produits consommables tels que, par exemple, alimentaires, cosmétiques ou industriels.

L'invention vise à répondre, dans le domaine alimentaire, aux besoins et au désir se développant chez les consommateurs de disposer de produits alimentaires conditionnés, empaquetés, prêts à l'emploi et, immédiatement disponibles sans préparation particulière.

L'invention permet de répondre aux besoins de consommateurs cherchant à faire leurs provisions de produits alimentaires sous forme de dose unitaire. préparée et conditionnée, par conséquent facilement prélevée dans les rayons des points de vente en libre-service, ces produits empaquetés étant propres à une conservation plus ou moins longue, soit à la température ambiante, soit dans les rayons d'un réfrigérateur ou éventuellement d'un congélateur.

Lors de l'emploi, les produits peuvent ainsi être prélevés du lieu de stockage et utilisés soit à la température ambiante soit après un réchauffage dans un four d'ambiance ou à rayonnement infrarouge, ou encore du type four à micro-onde.

Les emballages actuellement utilisés et répondant à ces fins sont essentiellement constitués de barquettes, boîtes ou récipients en métal ou en matière plastique.

Ces conteneurs connus ne donnent pas entièrement satisfaction dans la mesure où ils ne sont pas biodégradables ni recyclables. Par définition à usage unique, ils sont jetés et se retrouvent dans les ordures ménagères donc l'accumulation pose de graves problèmes pour la collectivité; ils sont une source de pollution et d'encombrement. Les matières plastiques incinérées dégagent des gaz toxiques, ce qui nécessite de laver les fumées avant de permettre leur rejet dans l'atmosphère.

Dans le cadre de préoccupations écologiques, on cherche à remplacer les matériaux constituants les emballages perdus non récupérables et non biodégradables notamment à base de feuilles d'aluminium ou de matière synthétique, par des matériaux soit recyclables, soit biodégradables, soit encore susceptibles d'incinération et par conséquent susceptibles de fournir des calories mais sans dégager de gaz toxiques.

Il apparaît également souhaitable, notamment dans le cadre de produits alimentaires soumis à une conservation prolongée, d'éviter les matériaux de synthèse dont les molécules sont susceptibles de transiter et de migrer depuis la matière d'enveloppement vers et au sein du produit contenu, notamment lors du réchauffage des denrées.

De plus, les matériaux utilisés traditionnellement pour la réalisation de barquettes rigides permettent mal le passage direct du produit alimentaire dans son récipient de stockage dans une enceinte de réchauffement, lorsqu'il s'agit par exemple de préparations alimentaires destinées à être consommées, soit après une cuisson finale, soit après même un simple réchauffement. Les matières métalliques ne se prêtent pas au passage dans un four à micro-onde, en raison de leur conductivité électrique ; et les barquettes ou récipients de stockage en matière de synthèse, souvent de nature thermoplastique, ne résistent pas à une élévation de température compatible avec une cuisson finale ou avec un réchauffement satisfaisant des produits alimentaires.

On a décrit dans le document WO 91/15410, un récipient associant un papier de type ingraissable avec une couche de polyéthylène, cette dernière étant destinée à faire barrière au transfert d'oxygène, et donc à l'oxydation du produit alimentaire destiné à être contenu dans ce récipient.

Un autre objectif de l'invention, outre de palier aux inconvénients sur le plan de la charge pollutive supportée par la collectivité, est de répondre au souhait du consommateur de disposer d'un récipient apte à permettre un stockage éventuellement prolongé, ce même récipient pouvant être, lors de la phase préparation et précédant la consommation, soumis à un réchauffement soit dans un four d'ambiance, soit dans un four à rayonnement infrarouge, soit encore dans un four à micro-onde.

Aucun matériau actuellement utilisé pour le conditionnement et la conservation de produits alimentaires ne répond cumulativement à ces divers impératifs.

Un objet de la présente invention est de proposer des gammes de récipients ou conditionnements, notamment sous forme de barquettes, susceptibles d'être occlus tout en étant facilement ouverts lors de la phase finale précédant la consommation, ces récipients étant aptes après une phase de conservation, à subir une phase de réchauffement éventuelle soit aux fins d'une cuisson finale soit en vue de les amener à la température appropriée, sans transvasement, le produit étant ainsi susceptible de passer directement de l'enceinte de stockage (simple armoire, réfrigérateur ou congélateur), dans l'assiette ou sur la table de consommation, qu'il s'agisse de la table familiale ou d'une table de restauration collective.

Selon l'invention, celle-ci concerne un recipient notamment sous forme de barquette tel que défini par la revendication 1.

L'invention concerne également un procédé de réalisation d'un tel récipient et caractérisé en ce que l'on utilise une ou plusieurs feuilles de papier ingraissable, notamment sulfurisé, de grammage compris entre 25 et 250 g/m², ce papier étant humidifié en vue d'améliorer sa malléabilité et son élasticité par incorporation d'un taux d'humidité compris entre 10 et 30%, cette feuille étant ensuite mise en forme pour constituer un volume récepteur du produit contenu par rainage et repli des bords ou rainage et thermoformage au moyen de poinçons et matrices chauffés.

D'autres caractéristiques et avantages de l'invention ressortiront de la description qui suit et qui présente quelques exemples de réalisation présentés à titre illustratif et sans caractère limitatif.
La figure 1 représente une vue en coupe d'une barquette selon l'invention, selon une première forme de réalisation ; et
La figure 2 en représente une variante de réalisation.

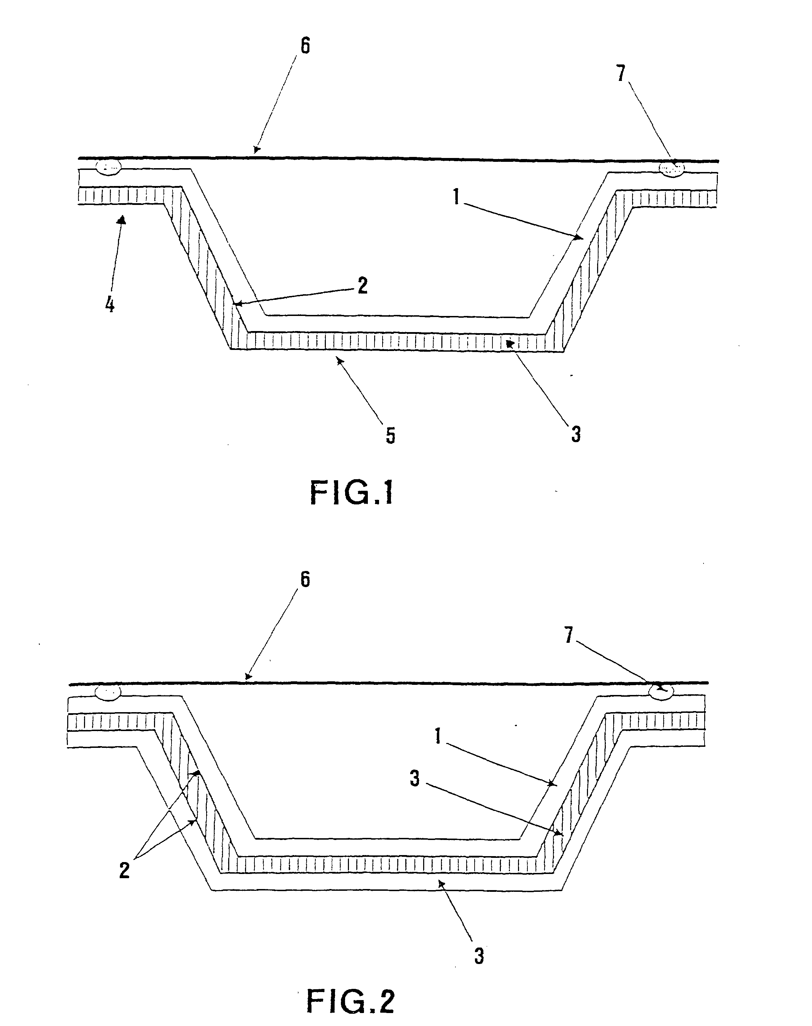

Les figures 1 et 2 se rapportent à une forme de réalisation de l'invention dans laquelle la barquette est réalisée à partir d'un complexe associant une couche de papier sulfurisé et une feuille de carton.

Selon les deux figures, on voit que l'on a réalisé un complexe comportant une couche, qui deviendra la face intérieure future du récipient après sa conformation, et formée de papier ingraissable, et plus particulièrement dans l'exemple montré, de papier sulfurisé.

La couche formée du papier sulfurisé 1 est contrecollée par une couche de colle interstitielle 2 sur la couche de carton 3 qui conformera la face extérieure de la barquette.

Dans cet exemple, la feuille de papier sulfurisé est prévue avec un grammage relativement léger et variant de 25 g/m² à 150 g/m², et de préférence entre 40 et 70 g/m², tandis que le carton est constitué d'une feuille de carton de grammage d'environ 250 g/m².

La colle est une colle de nature organique permettant de constituer une barrière à l'eau; on utilisera avantageusement le produit connu sous la dénomination commerciale SWIFT EC1 2340, produit par la société SWIFT ADHESIFS FRANCE.

La feuille plane ainsi constituée et conformant le complexe destiné à la réalisation du récipient ou de la barquette selon l'invention est ensuite mise en forme de façon à définir un espace récepteur du produit, notamment du produit alimentaire.

La mise en forme peut être effectuée de deux façons.

Selon une première méthode, on conforme selon un plan déterminé des rainures ou des cannelures représentant une configuration géométrique voulue et ces rainures ou cannelures définissant les angles de repli des faces du récipient lors de sa mise en forme.

Ces opérations peuvent être effectuées en continu sur des machines de type connu dans l'industrie de la cartonnerie et utilisées habituellement pour la conformation de boîtes; après relèvement des faces et repli l'une contre l'autre des parois venant en contact, ces dernières sont solidarisées entre elles de façon à assurer la stabilité de l'ensemble; on obtient ainsi un volume creux défini par les parois repliées du complexe et conformant la barquette prévue pour la réception des denrées de produits alimentaires convenablement dosés.

Selon une seconde méthode de réalisation, le complexe est mis en forme en une seule opération de thermoformage, dans laquelle le complexe est pris entre une empreinte en creux ou matrice et une empreinte en relief de conformation correspondante ou poinçon. Matrice et poinçon sont chauffés et permettent d'assurer et de stabiliser la déformation des parois qui sont relevées à partir du fond pour conformer la barquette finale voulue. Dans cette opération, et préalablement au passage dans la machine d'estampage ou de thermoformage, l'ensemble et notamment la face constituée par le papier sulfurisé 1 est soumis à un ramollissement par imprégnation partielle ou conditionnement par passage dans un caisson vapeur.

L'invention n'est pas limitée au mode de réalisation décrit ci-dessus, mais inclut toute variante. Par exemple, le feuille extérieure, sur laquelle est collée ou contrecollée la feuille intérieure de papier du type ingraissable, peut être elle-même constituée d'un papier sulfurisé. Il est possible d'associer les deux feuilles (intérieure et extérieure) de sulfurisé sans l'apport de colle, par fixation et association des deux feuilles de sulfurisé lors de la fabrication de ces dernières. Plus particulièrement, les deux feuilles de papier sulfurisé sont solidarisées par le gel de cellulose engendré lors de la fabrication du sulfurisé.

En ce qui concerne la feuille intérieure de matériau du type ingraissable, et de préférence du type sulfurisé, celle-ci peut être soit monocouche, soit multicouche, c'est-à-dire elle-même constituée de plusieurs couches de papiers différents, concourant au même but et présentant des propriétés d'ingraissabilité.

Enfin, les matériaux de type ingraissable, notamment du type sulfurisé, peuvent être soumis à tout type de traitement pour aboutir à un papier sulfurisé du type siliconé, quiloné ou traité de toute autre manière connue.

Par ailleurs, le récipient de l'invention n'est pas limité à contenir ou conserver des produits alimentaires, mais peut également être appliqué au domaine de la cosmétologie, pour des crèmes, shampooings, ou produits similaires, ou de l'industrie en général, pour des colles, peintures, mastics, ou produits similaires.

## Revendications

1. Récipient notamment sous forme de barquette, en vue de la conservation de produits, notamment du type alimentaire, tels que des produits laitiers ou des substances grasses, **caractérisé en ce qu'**il est constitué exclusivement d'une feuille monocouche ou multicouche de papier, la feuille monocouche ou intérieure étant du type ingraissable et plus spécialement de papier sulfurisé, de grammage compris entre 25 et 250 g/m², ladite feuille ayant été mise en forme pour réserver un volume de réception du produit contenu.

2. Récipient selon la revendication 1, **caractérisé en ce qu'**il est pourvu d'un opercule constitué d'une feuille étanche (6) souple, scellée sur les bords supérieurs (4) audit récipient et apte à être retiré par simple pelage.

3. Procédé de réalisation d'un récipient selon la revendication 1, **caractérisé en ce que** l'on utilise une feuille de papier ingraissable de grammage compris entre 25 et 250 g/m², ce papier étant édifié en vue d'améliorer sa malléabilité et son élasticité par incorporation d'un taux d'humidité compris entre 10 et 30 %, cette feuille étant ensuite mise en forme pour constituer un volume récepteur du produit contenu par rainage et repli des bords ou par thermoformage au moyen de poinçons et matrices chauffés.

## Patentansprüche

1. Behälter, insbesondere in Form eines Bechers, zum Aufbewahren von Produkten, insbesondere Nahrungsmittel, wie Milchprodukte oder fetthaltige Substanzen, **dadurch gekennzeichnet, dass** er ausschließlich aus einer monoschichtigen oder mehrschichtigen Papierlage gebildet ist, wobei die monoschichtige oder innere Lage vom nichtfettenden Typ, insbesondere Pergament ist, mit einem Flächengewicht, das zwischen 25 und 250 g/m² liegt, die genannte Lage in Form gebracht wurde um ein Behältervolumen für das enthaltene Produkt bereitzustellen.

2. Behälter nach Anspruch 1, **dadurch gekennzeichnet, dass** er mit einem Deckel versehen ist, der aus einem biegsamen, dichten Material (6) gebildet ist, das auf den oberen Rändern (4) des Behälters versiegelt ist, und geeignet ist durch einfaches Abziehen entfernt zu werden.

3. Verfahren zur Herstellung eines Behälters nach Anspruch 1, **dadurch gekennzeichnet, dass** man eine Lage aus nichtfettendem Papier mit einem Flächengewicht, das zwischen 25 und 250 g/m² liegt, verwendet, wobei dieses Papier behandelt wird um seine Formbarkeit und Elastizität durch Einbringen von Feuchtigkeit mit einem Gehalt, der zwischen 10 und 30% liegt, zu verbessern, dieser Bogen anschließend durch Fugen und Falzen der Ränder oder durch Wärmeformung mittels erwärmter Stempel und Matrizen in Form gebracht wird um ein Behältervolumen für das enthaltene Produkt zu bilden.

## Claims

1. Recipient, namely container for conserving consumable products, namely foodstuffs such as dairy products or fatty stuffs, **characterized in that** it is exclusively constituted by one mono-layer or multi-layer sheet of paper (1), the mono-layer or inner sheet being of the greaseproof type and more specifically of vegetable parchment, with a G.S.M. included between 25 g/m² and 250 g/m², said sheet being shaped in order to reserve a volume for receiving the product contained.

2. Recipient according to Claim 1, **characterized in that** it is provided with a cover constituted by a supple, tight sheet (6) sealed on the upper edges (4) of said recipient and adapted to be removed simply by being peeled off.

3. Method for making a recipient according to claim 1, **characterized in that** one sheet of greaseproof paper, with a G.S.M. included between 25 and 250 g/m² is used, said paper being humidified in order to render it more malleable and more elastic, by incorporating a degree of humidity included between 10% and 30%, said sheet being shaped with a view of constituting a volume for receiving the product contained, by fluting and folding the faces or by thermoforming by means of heated dies and punches.
